Europäisches Patentamt

European Patent Office

Office européen des brevets

(19)

(11) Veröffentlichungsnummer: **0 023 968**

**A1**

(12) EUROPÄISCHE PATENTANMELDUNG

(21) Anmeldenummer: 80103755.7

(22) Anmeldetag: 02.07.80

(51) Int. Cl.³: **B 60 G 15/06**

(30) Priorität: 10.08.79 DE 2932516

(43) Veröffentlichungstag der Anmeldung:
18.02.81 Patentblatt 81/7

(84) Benannte Vertragsstaaten:
FR GB IT

(71) Anmelder: Boge GmbH
Bogestrasse 50
D-5208 Eitorf/Sieg(DE)

(72) Erfinder: Mund, Hans Joachim
Zum Granzbach 6
D-5208 Eitorf/Sieg(DE)

(72) Erfinder: Nachtigall, Albrecht, Ing. grad.
Margaritenweg 34
D-5208 Eitorf/Sieg(DE)

(54) Anordnung zur Befestigung eines hydraulischen Schwingungsdämpfers oder dergleichen im Tragrohr eines radführenden Federbeins.

(57) Das Außenrohr (5') der Schwingungsdämpferpatrone (3') hat einen Bund (6') zur Abstützung am federtellerseitigen Ende des Tragrohres (1'), wobei der obere Endabschnitt des Tragrohres (1') einen teilweise längsgeschlitzten Einzug (7') zur Aufnahme des Außenrohrs (5') mit Schiebesitz im ungeklemmten Zustand aufweist und an beiden Seiten des Schlitzes (8') Spannköpfe (9') vorgesehen sind, die mit Klemmschrauben (10') ein Schellenschloß bilden.

Fig. 2

EP 0 023 968 A1

Croydon Printing Company Ltd.

- 1 -

Anordnung zur Befestigung eines hydraulischen
Schwingungsdämpfers oder dergleichen im Tragrohr eines radführenden Federbeins

Die Erfindung bezieht sich auf eine Anordnung zur Befestigung eines hydraulischen Schwingungsdämpfers oder dergleichen (Schwingungsdämpferpatrone) im Tragrohr eines radführenden Federbeins, insbesondere für Kraftfahrzeuge.

Derartige Schwingungsdämpferpatronen werden bekanntlich von oben in das Federbein-Tragrohr eingebaut und können aus diesem auch von oben wieder ausgebaut werden. Während das Tragrohr mit seinem unteren Ende über entsprechende Verbindungselemente mit dem Fahrwerk verbunden ist, ist das obere Kolbenstangenende der Schwingungsdämpferpatrone über ein Lager mit dem Fahrzeugaufbau verbunden. Zwischen einem Federteller am Tragrohr und einem weiteren Federteller am Lager des Fahrzeugaufbaus ist eine Fahrzeugtragfeder angeordnet.

Bei einer bekannten Anordnung der eingangs beschriebenen Gattung stützt sich die Schwingungsdämpferpatrone mit dem Boden ihres Außenrohrs gegen den Boden des Tragrohres ab und ist mit dem oberen Ende des Außenrohres über einen Schraubring mit dem Tragrohr verbunden. Dies hat den Nachteil, daß das Tragrohr tatsächlich auch nach oben bis zum Ende des Außenrohrs der Schwingungsdämpferpatrone verlaufen muß. Hierdurch wird eine Leichtbauweise erschwert, und andererseits ist der Schraubring für das Lösen und Befestigen der Schwingungsdämpferpatrone dabei schwer zugänglich, sofern die Fahrzeugtragfeder nicht demontiert wird.

Der vorliegenden Erfindung liegt die Aufgabe zugrunde, eine einfache und wirksame Anordnung zur Befestigung der Schwingungsdämpferpatrone in einem Federbein-Tragrohr zu schaffen, welches aus Gründen der Gewichtseinsparung insbesondere bis zum unteren Kragen des mit ihm verbundenen Federtellers verkürzt ist. Dabei soll die Befestigungsanordnung vor allem räumlich leicht unterbringbar und zugänglich sein.

Diese Aufgabe wird bei einer Befestigungsanordnung der eingangs beschriebenen Gattung erfindungsgemäß dadurch gelöst, daß das Außenrohr der Schwingungsdämpferpatrone einen Bund zur Abstützung am federtellerseitigen Ende des Tragrohrs aufweist, der obere Endabschnitt des Tragrohrs einen teilweise längsgeschlitzten Einzug zur Aufnahme des Außenrohrs mit Schiebesitz im ungeklemmten Zustand aufweist und an beiden Seiten des Schlitzes Spannköpfe vorgesehen sind, die mit Klemmschrauben ein Schellenschloß bilden. Bei einer bevorzugten Ausführungsform der Erfindung ist das Schellenschloß am Tragrohr aufgeschweißt. Jedoch kann das Schellenschloß gemäß einer weiteren ebenfalls vorteilhaften Ausbildung der Erfindung zu einer das Tragrohr umschlingenden separaten Schelle gehören.

Die erfindungsgemäße Befestigungsanordnung ist einfach aufgebaut und ermöglicht eine einfache und sichere Befestigung bzw. das Lösen der Schwingungsdämpferpatrone im Tragrohr durch unterhalb des Federtellers ausführbare Montage. Hierzu sind im wesentlichen die Klemmschrauben des Schellenschloßes zu betätigen, wodurch die Klemmung zwischen geschlitztem Tragrohr und Außenrohr der Schwingungsdämpferpatrone herbeigeführt bzw. beseitigt wird. Durch den Längsschlitz erhält das Tragrohr im Klemmbereich eine periphere und damit radiale Elastizität, die ausreicht, eine schub- und momentensteife Klemmung zu ermöglichen. Andererseits werden durch den Schlitz in vorteilhafter Weise die für die Übertragung der Biegemomente wichtigen äquatorialen Trägheitsmomente, d.h. die Biegesteifigkeit des Tragrohres, nicht oder nur geringfügig beeinflußt.

Ein weiterer Vorteil der Erfindung ergibt sich dadurch, daß bei Verwendung der erfindungsgemäßen Befestigungsanordnung das Tragrohr praktisch nur in seinem mittleren

- 4 -

Bereich vorhanden zu sein braucht und insbesondere im Bodenbereich der Schwingungsdämpferpatrone entfallen kann. Dies hat eine beträchtliche weitere Gewichts- und Materialeinsparung zur Folge. In diesem Fall ist lediglich dafür Sorge zu tragen, daß der Anschluß an die zum Achsschenkel führenden Wangen bereits unmittelbar unterhalb des Klemmbereichs erfolgt.

Vorteilhafterweise ist das Außenrohr im gesamten Klemmbereich mit einem dünnen Dichtpapier ummantelt. Hierdurch ergibt sich mit einfachen Mitteln ein wirksamer Korrosionsschutz.

Zum Korrosionsschutz kann auch am Bundsitz, vorzugsweise zwischen Bund und unterem Kragen des Federtellers, ein Dichtungsring oder dergleichen angeordnet sein.

Gemäß einer vorteilhaften Weiterbildung der erfindungsgemäßen Befestigungsanordnung, bei welcher insbesondere das Tragrohr unten geschlossen ist, ist im Bodenbereich der Schwingungsdämpferpatrone eine zusätzliche seitliche Abstützung innerhalb des Tragrohrs vorgesehen. Die seitliche Abstützung kann dabei auf einfache Weise als zwischen Schwingungsdämpferpatrone und Tragrohr hochgezogener Boden des Tragrohrs ausgebildet sein.

Bei der vorstehend beschriebenen Weiterbildung der Erfindung kann auf einfache Weise der Klemmbereich des Schellenschlosses in axialer Richtung noch kürzer ausgebildet werden. Gleichzeitig können die aufzubringenden Klemmkräfte geringer gewählt werden, wodurch die gesamte Dimensionierung des Schellenschlosses schwächer ausgebildet sein kann. Trotzdem ist die erfindungsgemäße Befestigungsanordnung dann immer noch ausreichend momentensteif.

Die Erfindung wird nachstehend anhand von in der Zeichnung schematisch dargestellten Ausführungsbeispielen näher erläutert. Es zeigen:

Figur 1 im teilweisen Aufriß ein Federbein mit einer Ausführungsform der erfindungsgemäßen Befestigungsanordnung und unten offenem Tragrohr,

Figur 2 eine teilweise geschnittene Seitenansicht von Figur 1 und

Figur 3 in teilweise geschnittener Seitenansicht entsprechend der Figur 2 ein Federbein mit einer zweiten Ausführungsform der erfindungsgemäßen Befestigungsanordnung und unten geschlossenem Tragrohr.

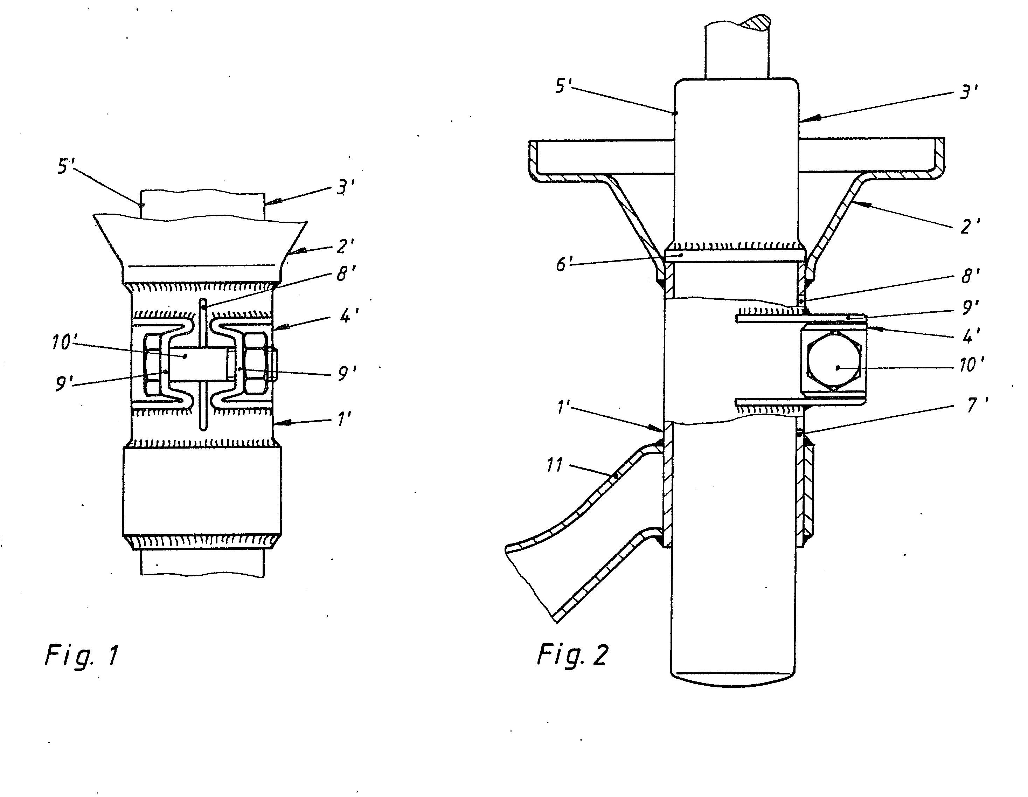

In den Figuren 1 bis 3 ist mit 1' bzw. 1'' ein Tragrohr eines Kraftfahrzeug-Federbeins bezeichnet, welches bis zum unteren Kragen des mit ihm verbundenen Federtellers 2' bzw. 2'' verkürzt ist. Im Tragrohr 1' bzw. 1'' ist eine Schwingungsdämpferpatrone 3' bzw. 3'' eingelagert. Zur Befestigung der Schwingungsdämpferpatrone 3' bzw. 3'' dient jeweils eine Befestigungsanordnung 4' bzw. 4''.

Bei den Befestigungsanordnungen 4' bzw. 4'' weist das Außenrohr 5' bzw. 5'' der Schwingungsdämpferpatrone 3' bzw. 3'' einen Bund 6' bzw. 6'' zur Abstützung am federtellerseitigen Ende des Tragrohres 1' bzw. 1'' auf. Der obere Endabschnitt des Tragrohres 1' bzw. 1'' weist einen teilweise längsgeschlitzten Einzug 7' bzw. 7'' zur Aufnahme des Außenrohrs 5' bzw. 5'' mit Schiebesitz (Paßsitz) im ungeklemmten Zustand der Befestigungsanordnung 4' bzw. 4'' auf. An beiden Seiten des Schlitzes 8' bzw. 8'' sind Spannköpfe 9' bzw. 9'' vorgesehen, die mit Klemmschrauben 1o' bzw. 1o'' ein Schellenschloß bilden.

In den zeichnerisch dargestellten Ausführungsbeispielen ist das Schellenschloß jeweils am Tragrohr 1' bzw. 1'' aufgeschweißt. Das Schellenschloß kann jedoch auch zu einer das Tragrohr umschlingenden separaten Schelle gehören.

Bei der Ausführungsform nach den Figuren 1 und 2 ist das Tragrohr 1' unten offen, und der "Einzug" 7' zur Aufnahme des Außenrohrs 5' mit Schiebesitz-Paßmaß im ungeklemmten Zustand verläuft über die gesamte Tragrohrlänge. Das Außenrohr 5' ist im gesamten Klemmbereich oder rationellerweise gleich über die gesamte Länge des Tragrohrs 1' mit einem dünnen (zeichnerisch nicht erkennbaren) Dichtpapier ummantelt. Hierdurch ist mit einfachen Mitteln ein wirksamer Korrosionsschutz gegeben.

- 7 -

Bei der Ausführungsform nach den Figuren 1 und 2 erfolgt, wie besonders deutlich aus Figur 2 ersichtlich, der Anschluß an die zum (nicht dargestellten) Achsschenkel führenden Wangen 11 bereits kurz unterhalb des Klemmbereichs der Befestigungsanordnung 4'.

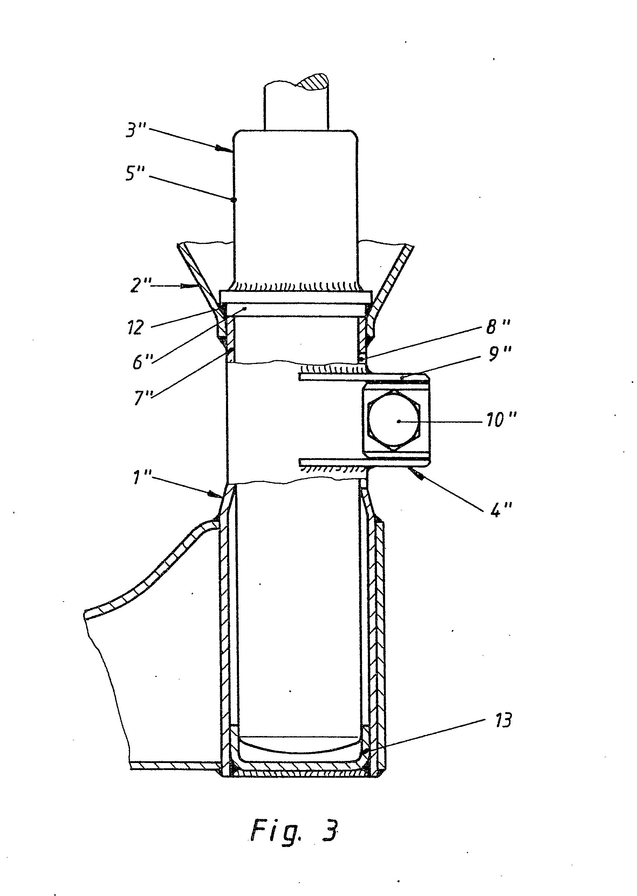

Die Ausführungsform nach Figur 3 besitzt eine im wesentlichen der vorstehend beschriebenen Ausführung entsprechende Befestigungsanordnung 4''. Im Unterschied zur Ausführung nach den Figuren 1 und 2 ist zum Korrosionsschutz zwischen Bund 6'' und unterem Kragen des Federtellers 2'' ein Dichtungsring 12 angeordnet. Ferner ist bei dieser Ausführungsform das Tragrohr 1'' unten geschlossen ausgebildet, so daß die Verbindung zum Achsschenkel hin auf die bisher bekannte Weise erfolgt.

Ein weiteres Erfindungsmerkmal der Ausführung nach Figur 3 liegt darin, daß im Bodenbereich der Schwingungsdämpferpatrone 3'' eine zusätzliche seitliche Abstützung innerhalb des Tragrohrs 1'' vorgesehen ist. Die seitliche Abstützung ist insbesondere als zwischen Schwingungsdämpferpatrone 3'' und Tragrohr 1'' hochgezogener Boden 13 des Tragrohrs 1'' ausgebildet. Wie bereits weiter oben näher erläutert, wird durch diese zusätzliche seitliche Abstützung die Klemm-Befestigungsanordnung auf einfache Weise merklich entlastet.

Die erfindungsgemäßen Befestigungsanordnungen 4' bzw. 4'', zu deren Betätigung lediglich die Spannköpfe 9' bzw. 9'' mittels der Klemmschrauben 1o' bzw. 1o''

aufeinander zu oder voneinander weg zu bewegen sind, ermöglichen mit einfachen Mitteln ein sicheres Befestigen bzw. Lösen der Schwingungsdämpferpatrone 3' bzw. 3" im Tragrohr 1' bzw. 1" durch unterhalb des Federtellers 2' bzw. 2" ausführbare Montage.

Der Vollständigkeit halber sei noch erwähnt, daß die erfindungsgemäße Befestigungsanordnung noch einen weiteren wesentlichen Vorteil ermöglicht. In den Fällen, in denen der Lenkhebel des Fahrzeugs nicht wie zumeist üblich im Bereich am Federbein befestigt ist, bietet die Befestigungsanordnung nach der Erfindung die Möglichkeit, die Lenkhebelbefestigung zum Federbein am Schellenschloß vorzunehmen, insbesondere als gemeinsamen Bauteil mit diesem auszubilden.

– 1 –

Patentansprüche:

1. Anordnung zur Befestigung eines hydraulischen Schwingungsdämpfers oder dergleichen (Schwingungsdämpferpatrone) im Tragrohr eines radführenden Federbeins, insbesondere für Kraftfahrzeuge, dadurch gekennzeichnet, daß das Außenrohr (5', 5'') der Schwingungsdämpferpatrone (3', 3'') einen Bund (6', 6'') zur Abstützung am federtellerseitigen Ende des Tragrohres (1', 1'') aufweist, wobei der obere Endabschnitt des Tragrohres (1', 1'') einen teilweise längsgeschlitzten Einzug (7', 7'') zur Aufnahme des Außenrohrs (5', 5'') mit Schiebesitz im ungeklemmten Zustand aufweist und an beiden Seiten des Schlitzes (8', 8'') Spannköpfe (9', 9'') vorgesehen sind, die mit Klemmschrauben (1o', 1o'') ein Schellenschloß bilden.

2. Anordnung nach Anspruch 1, dadurch gekennzeichnet, daß das Schellenschloß (9', 1o'; 9'', 1o'') am Trag- rohr (1', 1'') aufgeschweißt ist.

3. Anordnung nach Anspruch 1, dadurch gekennzeichnet, daß das Schellenschloß zu einer das Tragrohr umschlingenden separaten Schelle gehört.

4. Anordnung nach einem der Ansprüche 1 bis 3, dadurch gekennzeichnet, daß das Außenrohr (5', 5'') im gesamten Klemmbereich mit einem dünnen Dichtpapier ummantelt ist.

5. Anordnung nach einem der Ansprüche 1 bis 4,
dadurch gekennzeichnet,
daß am Bundsitz, vorzugsweise zwischen Bund (6'') und unterem Kragen des Federtellers (2''), ein Dichtungsring (12) oder dergleichen angeordnet ist.

6. Anordnung nach einem der Ansprüche 1 bis 5,
dadurch gekennzeichnet,
daß im Bodenbereich der Schwingungsdämpferpatrone (3'') eine zusätzliche seitliche Abstützung innerhalb des Tragrohrs (1'') vorgesehen ist.

7. Anordnung nach Anspruch 6,
dadurch gekennzeichnet,
daß die seitliche Abstützung als zwischen Schwingungsdämpferpatrone (3'') und Tragrohr (1'') hochgezogener Boden (13) des Tragrohrs (1'') ausgebildet ist.

Fig. 1

Fig. 2

1/2

0023968

Fig. 3

Europäisches
Patentamt

**EUROPÄISCHER RECHERCHENBERICHT**

Nummer der Anmeldung

EP 80 10 3755.7

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - U - 1 953 486 (BMW AG) <br> * Anspruch; Fig. * <br> -- | 1 |
| | DE - A1 - 2 555 995 (FORD-WERKE AG) <br> * Seite 3, Zeilen 9 bis 20; Fig. * <br> -- | 1 |
| | DE - U - 1 968 944 (FORD-WERKE AG) <br> * Anspruch; Fig. * <br> -- | 1 |
| A | FR - A1 - 2 349 467 (S.A. AUTOMOBILES CITROEN) <br> -- | |
| A | DE - U - 7 000 182 (SIMCA) <br> ---- | |

**KLASSIFIKATION DER ANMELDUNG (Int.Cl.3)**

B 60 G 15/06

**RECHERCHIERTE SACHGEBIETE (Int. Cl.3)**

B 60 G 13/00

B 60 G 15/00

F 16 F  9/00

F 16 F 13/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 24-10-1980 | LEITZ |

EPA form 1503.1  06.78